# EUROPEAN PATENT APPLICATION

(11) **EP 4 826 336 A1**
(43) Date of publication of application: **21.10.2026**
(21) Application number: 25170269.2
(22) Date of filing: 14.04.2025
(51) Int. Cl.: G01C 21/34, B60W 30/09, B60W 30/095, G01C 21/00

(54) **DRIVE PATHS MODEL MAINTENANCE**

(71) Applicant: Bayerische Motoren Werke Aktiengesellschaft, 80809 München (DE)
(72) Inventor: Brown, Sean, 94469 Deggendorf (DE); Fuchs, Horst, 85716 Unterschleißheim (DE); Huber, Theresa, 85386 Eching (DE); Jansen, Axel, 85716 Unterschleißheim (DE); Julia Cristobal, Miguel, 81245 München (DE); Rietschel, Udo, 80939 München (DE); Wahl, Swen, 81373 München (DE)

(57) **Abstract**

The present disclosure relates to maintaining a drive paths model during operation of a vehicle. The drive paths model is configured to provide environmental awareness regarding a current section of a road to one or more driving automation system features and includes at least one plurality of lane model segments, respectively approximating corresponding lane segments of a corresponding lanes and includes a fore plurality and an aft plurality. To maintain the drive paths model, a curvature profile is derived for a fore distance ahead of the vehicle, which is indicative of a curvature of the current section of the road ahead. Based on the curvature profile, sections of approximately constant curvature change are identified. Then, each fore plurality is maintained to include lane model segments based on the identified sections and each aft plurality is maintained by reassigning lane model segments to each corresponding aft plurality.

## Description

### TECHNICAL FIELD

The invention generally relates to trajectory planning by one or more driving automation system features of a vehicle and more precisely to determining a drive paths model and lane model segments thereof, which approximate the course of a road the vehicle is travelling along.

### BACKGROUND

A modern vehicle typically provides at least some level of driving automation. To enable driving automation, environmental awareness of the course of the road the vehicle travels along is necessary. To obtain the environmental awareness, the vehicle, through one or more driving automation system features, determines and maintains a drive paths model, i.e. initially generates and then updates the drive paths model as the vehicle travels along the road. The drive paths model approximates one or more lanes of the road the vehicle is traveling along using a plurality of lane segments for each of the one or more lanes. Existing approaches to determining and maintaining a drive paths model of a road rely on approximating the road using lane model segments of constant length. A constant length of the lane model segments is typically chosen to ensure that the drive paths model at a given point in time provides the environmental awareness of the course of the road along a pre-determined length aft and fore of the vehicle with a number of segments allowing real time or at least approximately real time processing of the drive paths model. However, depending on the road geometry, lane segments of constant length may not approximate the road with the level of accuracy required to enable safe driving automation. Accordingly, reducing the constant length of the lane model segments to accommodate all conceivable road geometries may run afoul of processing requirements as the drive path models needs to be processed in real time or at least approximately real time by the vehicle in order for the vehicle to perform safe lateral and/or longitudinal guidance of the vehicle.

Therefore, it is an object of the present disclosure to enable maintaining a drive paths model which enables accurate approximation of conceivable road geometries while simultaneously ensuring processing of the drive paths model in a time frame suitable for safe lateral and/or longitudinal guidance of the vehicle.

### SUMMARY OF THE INVENTION

To achieve this objective, the present disclosure provides a method for maintaining a drive paths model during operation of a vehicle. The drive paths model is configured to provide environmental awareness regarding a current section of a road to one or more driving automation system features of the vehicle and includes at least one plurality of lane model segments. Each plurality of lane model segments approximates corresponding lane segments of a corresponding lane of the current section of the road. Each plurality of lane model segments includes a fore plurality of lane model segments ahead of a current position of the vehicle and an aft plurality of lane model segments behind the current position of the vehicle. The method comprises, while the current position of the vehicle changes: deriving a curvature profile for a fore distance ahead of the current position of the vehicle from one or more sets of map data, the curvature profile being indicative of a curvature of at least one lane of the current section of the road ahead of the vehicle, identifying sections of approximately constant curvature change along the fore distance based on the curvature profile, maintaining each fore plurality to include lane model segments based on the identified sections of approximately constant curvature change, maintaining each aft plurality by reassigning lane model segments of each fore plurality to each corresponding aft plurality based on the current position of the vehicle, and providing the drive paths model to one or more driving automation system features, the one or more driving automation system features being configured to perform lateral and/or longitudinal control of the vehicle based on the drive paths model.

The present disclosure further provides a corresponding automotive control unit and a vehicle comprising the automotive control unit.

### BRIEF DESCRIPTION OF THE DRAWINGS

Examples of the present disclosure will be described with reference to the following appended drawings, in which like reference signs refer to like elements.
Figs. 1A to 1D illustrate a vehicle driving along a road and drive paths models based on the current position of the vehicle according to examples of the present disclosure.
Figs. 2A to 2D illustrate maintaining a drive paths model for an exemplary road based on a curvature and corresponding curvature change of the road according to examples of the present disclosure.
Figs. 3A to 3D illustrate maintaining a drive paths model for an exemplary road based on a curvature and corresponding curvature change of the road according to examples of the present disclosure.
Fig. 4 illustrates maintaining a drive paths model for an exemplary road further based on automotive sensor data according to examples of the present disclosure.
Fig. 5 illustrates determining a junction point at which a lane branches off from or merges with a further lane according to examples of the present disclosure.
Figs. 6A to 6C show a flowchart of a method for maintaining a drive paths model during operation of a vehicle according to examples of the present disclosure.
Fig. 7 illustrates a vehicle according to examples of the present disclosure.
Fig. 8 illustrates an automotive control unit according to examples of the present disclosure.

It should be understood that the above-identified drawings are in no way intended to limit the present disclosure. Rather, these drawings are provided to assist in understanding the present disclosure. The person skilled in the art will readily understand that aspects of the present invention shown in one drawing may be combined with aspects in another drawing or may be omitted without departing from the scope of the present disclosure.

### DETAILED DESCRIPTION

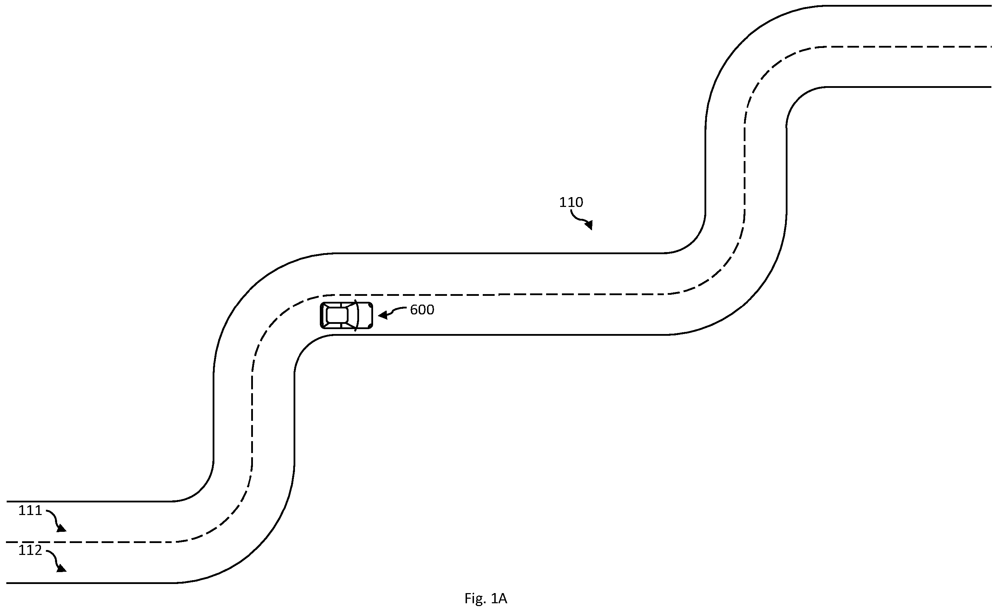

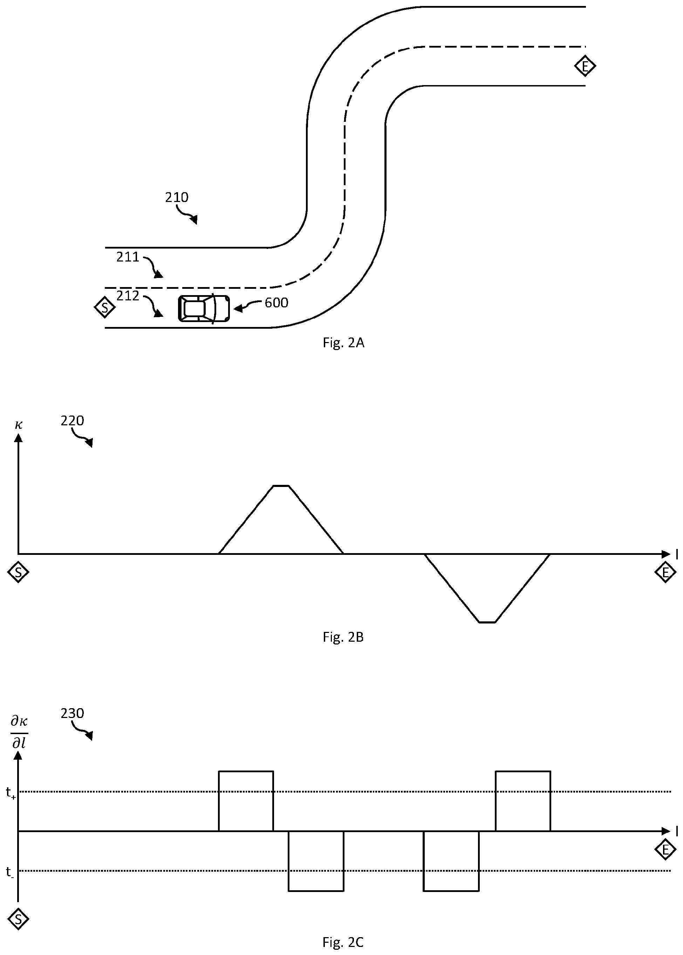

The present disclosure provides a method and corresponding devices for maintaining a drive paths model during operation of a vehicle. To better understand the present disclosure, first the drive paths model will be discussed with reference to Figs. 1A to 1D followed by a summary of how the maintenance of the drive paths model is performed. The maintenance of the drive paths model will then be discussed in detail with regard to Figs. 2A to 8.

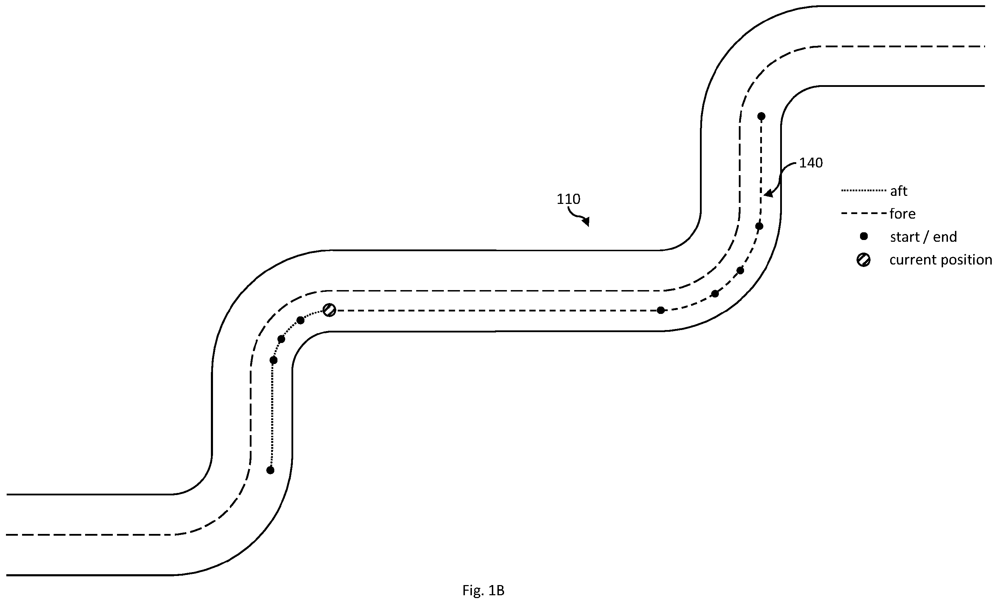

The drive paths model in the context of the present disclosure is configured to provide environmental awareness regarding a current section of a road to one or more driving automation system features of the vehicle. Taking the situation depicted in Fig. 1A as an example, a vehicle 700 travels along a lane 112 of a road 110. A drive paths model 140 corresponding to the situation depicted in Fig. 1A is shown in Fig. 1B overlaid over road 110. As can be seen from Fig. 1B, drive model 140 approximates a current section of lane 112, which extends aft of the current position of vehicle 700 as well as fore of the current position vehicle 700. By approximating the current section of lane 112, drive paths model 140 provides environmental awareness of road 110 to one or more driving automation system features of vehicle 700.

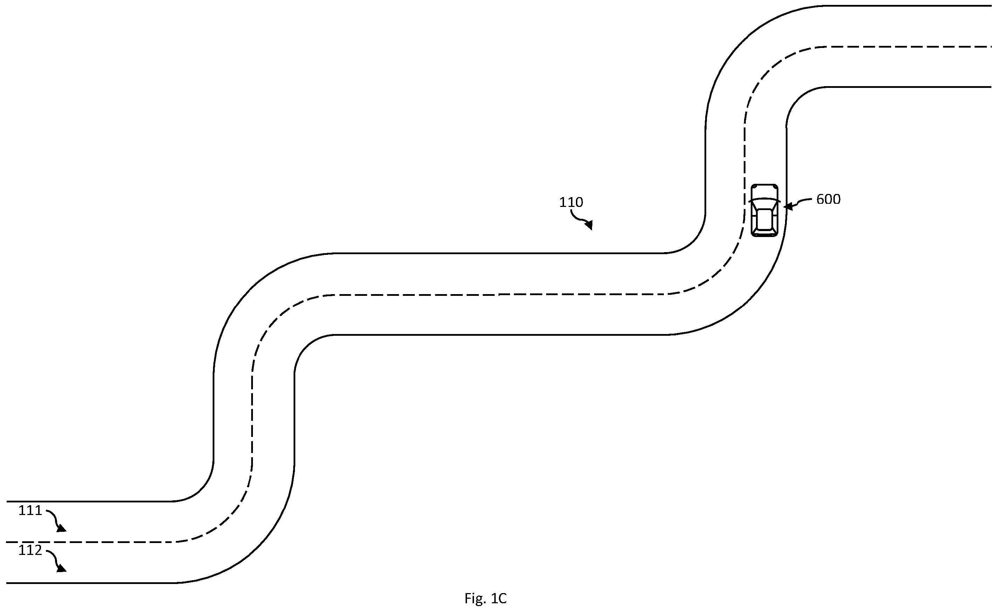

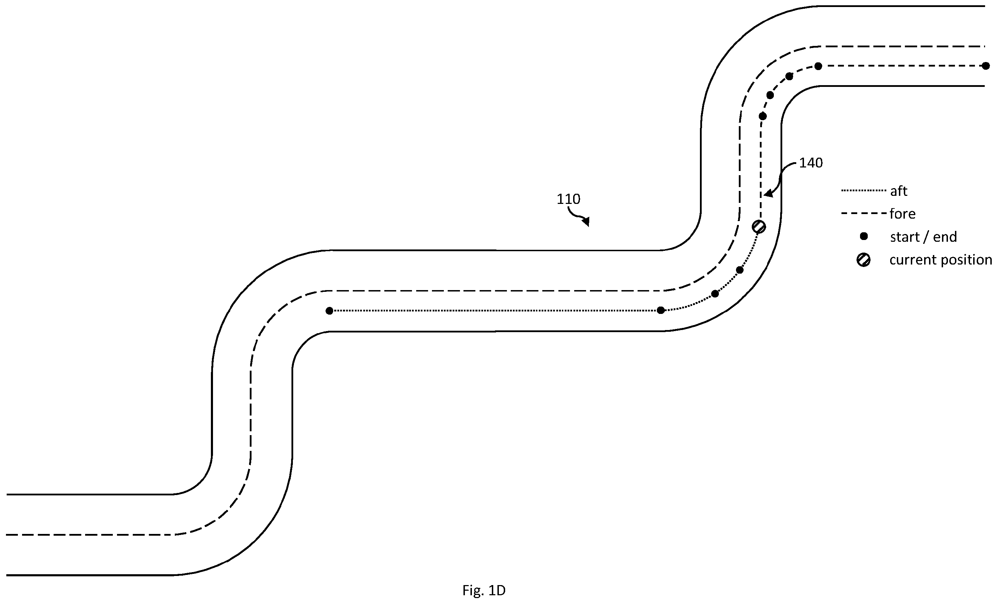

The section of the road approximated by the drive paths model in the sense of the current disclosure, such as drive paths model 140 of Figs. 1A to 1D is referred to as the current section of road in order to indicate that the section of the road approximated by the drive paths model changes as the current position of vehicle 700 changes. As can be seen in Fig. 1C compared with Fig. 1A, vehicle 700 proceeds along lane 112 of road 110. Accordingly, maintained drive paths model 140 of the current section of road 110 changes, as illustrated in Fig. 1D compared with Fig. 1B. In other words, the drive paths model in the context of the present disclosure is configured to provide environmental awareness around the current position of vehicle 700, which typically changes during operation of vehicle 700.

In more detail and as illustrated throughout the figures, the drive paths model includes at least one plurality of lane model segments. Each plurality of lane model segments approximates corresponding lane segments of a corresponding lane of the current section of the road. Again using drive paths model 140 of Figs. 1B and 1D as an example, drive paths model 140 includes one plurality of lane model segments, whose start and end points are indicated by black circles and which approximate the corresponding current sections of lane 112 of road 110 of Figs. 1B and 1D. The course of each segment is indicated by the dotted or dashed line, respectively, between the start and end points. It will be understood that the end of one lane model segment coincides with the start of the subsequent lane model segment.

Each lane model segment is shown throughout the figures as corresponding to the center line of the corresponding lane. While this approach may commonly be used in view of the fact that the drive paths model serves as the basis of lateral and/or longitudinal control of vehicle 700, the lane model segments of a given plurality of lane model segments may be located at any position within the corresponding lane as needed for the actual implementation of the longitudinal and/or lateral control of vehicle 700.

As illustrated throughout the figures, the lane model segments may be of varying length. That is, the lane model segments in the context of the present disclosure may cover any length of corresponding segments of a corresponding lane based on with the length depending on the length of sections of a given lane exhibiting approximately constant curvature change, as will be discussed in more detail below with regards to steps 610 to 622 of method 600. Accordingly, since the curvature of each lane segment changes linearly, the lane model segments may also be referred to as clothoid splines.

It will be understood that e.g. due to computational and/or storage requirements, a maximum length or a minimum length of the lane model segments may be defined. A minimum length of the lane model segments may further be defined in view of smoothness requirements. That is, if very short lane model segments, e.g. of lengths below 1 m or below 60 cm, are included in a given plurality of lane model segments, the longitudinal and/or lateral control of vehicle 700 based on such a drive paths model may perform more frequent changes to the control of vehicle 700 in view of the resulting increased number of lane model segment start and end points. Such frequent changes to the control of vehicle 700 may be perceived by the occupants of vehicle 700 as jerks, thus reducing the perceived comfort of the longitudinal and/or lateral control of vehicle 700 based on such a drive paths model. Smoothness requirements may also ensure the safety of intended functionality (SOTIF). As defined in standard ISO21448:2022, SOTIF is to be understood as the absence of unreasonable risk due to hazards resulting from functional insufficiencies, i.e. with regard to the drive paths model in particular resulting from performance insufficiency, of the intended functionality of the drive paths model, i.e. the provision of the basis on which lateral and/or longitudinal control decisions are made.

Each lane model segment may be defined by a start point, an end point, an initial heading, an initial curvature, and a constant curvature change. The start point and the end point may e.g. be defined in terms of a coordinate system of vehicle 700 having its origin on the center of the rear axle. The start and end points in the coordinate system of vehicle 700 may be derived from positional information of each lane included in the one or more sets of map data. It will be understood that instead or in addition to the coordinate system of vehicle 700 GPS coordinates or any other type of information indicative of a position may be used. Further, it will be understood that each lane model segment may be defined by further and/or other parameters while taking into the concept of constant curvature change into account.

While the drive paths model is shown throughout the figures as including one plurality of lane model segments, it will be understood that the drive paths model may include any number of pluralities of lane model segments as warranted by a given road vehicle 700 travels along. For example, if vehicle 700 travels along a road having two lanes in the direction of travel of vehicle 700, the drive paths model may include and may be maintained to include two pluralities of lane model segments, i.e. one plurality of lane model segments per lane in the direction of travel of vehicle 700. In a further example, if vehicle 700 travels along a road generally having a single lane in the direction of travel of vehicle 700 but sectionally including turn lanes, the drive path model may analogously generally include one plurality of lane model segments corresponding to the single lane in the direction of travel of vehicle 700 but may further include a plurality of lane model segments approximating the turn lane, if the current section based on the current position of vehicle 700 includes a turn lane. Further, drive paths model 700 may also include pluralities of lane model segments for lanes of oncoming traffic, such as lane 111 in Figs.1A to 1D, e.g. in order to assist the one or more driving automation system features of vehicle 700 to determine overtaking maneuvers of slower vehicles in lane 112 or to anticipate driving maneuvers of oncoming traffic. Using the Katy Freeway section of interstate I-10, i.e. the widest interstate in the US, as an extreme example, the drive paths model may include and be maintained to include 26 pluralities of lane model segments, i.e. all lanes in the direction of travel of vehicle 700, including the lanes of the access roads, as well as all oncoming lanes and associated access roads. In a further example, the drive paths model may include one plurality of lane model segments for the lane vehicle 700 is travelling along as well as one plurality of lane model segments for each adjacent lane for a total of two pluralities of lane model segments on a two-way road or a total of three pluralities of lane model segments on roads with multiple lanes per direction. Accordingly, the drive paths model may include any number of pluralities of lane model segments based on the lanes present in a given current section of the road the vehicle is traveling along and as needed for the performance of the lateral and/or longitudinal control of vehicle 700.

As discussed above, the drive paths model may account for turn lanes and more generally for lanes branching off from a lane included in the drive paths model as well as lanes merging with a lane included in the drive paths model. To this end, a junction point respectively corresponding to a start point or an end point of a lane model segment of a new plurality of lane model segments corresponding to a new lane branching off from or merging with a given lane may be determined based on a lane model segment of a plurality of lane model segments approximating the given lane as well as the concept of constant curvature change, as will be discussed in more detail below. If the current position of vehicle 700 is behind the junction point, the junction point of the new plurality of lane model segments may correspond to the start point of the first lane model segment of the fore plurality of the new plurality of lane model segments. If the current position of vehicle 700 is ahead of the junction point, the junction point may respectively be a start point and an end point of two lane model segments of the aft plurality of the new plurality of lane model segments.

As will be apparent from the discussion of the number of pluralities of lane model segments, a road in the context of the present description may be any type of vehicular infrastructure ranging from a single lane one-way street to a controlled-access highway with multiple lanes per direction.

Each plurality of lane model segments includes a fore plurality of lane model segments ahead of a current position of the vehicle and an aft plurality of lane model segments behind the current position of the vehicle. As can be seen in Figs. 1B, 1D, 2D, 3D and 4, the fore and aft pluralities of the respective drive paths models are illustrated as follows: The respective current position of vehicle 700 in the various figures is illustrated by a patterned circle, each aft plurality by dotted segments and each corresponding fore plurality by dashed segments. To assist in understanding this concept, Figs. 1B, 1D, 2D, 3D and 4 include a legend explaining the above-described illustration of the current position as well as of the fore and aft pluralities.

The fore plurality of each plurality of lane model segments may extend up to a fore distance ahead of a given current position of vehicle 700. Likewise, the aft plurality may extend up an aft distance behind a given current position of vehicle 700. Since the length of each lane model segment depends on the length of lane segments of constant curvature change, as will be discussed in more detail below, the total number of lane model segments included in the aft and fore pluralities and thus in each plurality of lane model segments along the combined aft and fore distances may vary depending on the current position of vehicle 700. In some examples of the present disclosure, the total number of lane model segments included in each plurality of lane model segments may be fixed, e.g. in view of storage and/or run time requirements. In such cases, the aft plurality and/or the fore plurality may extend along less than the aft distance and/or the fore distance if the corresponding plurality of lane model segments would otherwise include more lane model segments than the fixed number of lane model segments. Accordingly, in examples of the present disclosure in which the total number of lane model segments per plurality of lane model segments is fixed, the number of lane model segments may be distributed across the respective aft and fore pluralities in a manner ensuring that a sufficient percentage of the aft and fore pluralities is covered by lane model segments.

It will be understood that the aft distance and the fore distance may be different from each other. For example, the fore distance may be longer than the aft distance, as implied by Figs. 1B, 1D, 2D, 3D and 4. This may e.g. be the case as the aft plurality of lane model segments may primarily serve the purpose of providing awareness of the road in the vicinity behind vehicle 700 in order to estimate driving maneuvers of vehicles traveling behind vehicle 700 while the fore plurality may primarily serve the purpose of determining the upcoming lateral and/or longitudinal control of vehicle 700. That is, the fore plurality and thus the fore distance may be considered as indicating the control horizon up to which vehicle 700 is aware of at least the lane vehicle 700 is travelling along. Consequently, the fore distance may be longer than the aft distance. It will however be understood that the fore distance and the aft distance may also be substantially equal depending on a given implementation of the drive paths model. For example, the aft and the fore distance may in some implementations of the present disclosure be determined dynamically, e.g. in view of the speed and the driving environment of vehicle 700. For example, in urban settings and/or at low speeds, the aft distance and the fore distance may extend a similar distance from the current position of vehicle 700 as both the required environmental awareness regarding vehicles travelling behind vehicle 700 as well as the required environmental awareness regarding the control horizon in dense urban traffic may be similar.

In some examples of the present disclosure, the aft distance may be reduced to zero, causing the aft plurality to be omitted from the one or more pluralities of lane model segments of the drive paths model. The aft distance may e.g. be reduced to zero if, in view of processing power constraints, the available processing power needs to be allocated entirely to the fore pluralities of the drive paths model and the lateral and/or longitudinal control of vehicle 700 based thereon. In such examples of the present disclosure, each aft plurality may be approximated based on performing back propagation on odometry data of vehicle 700.

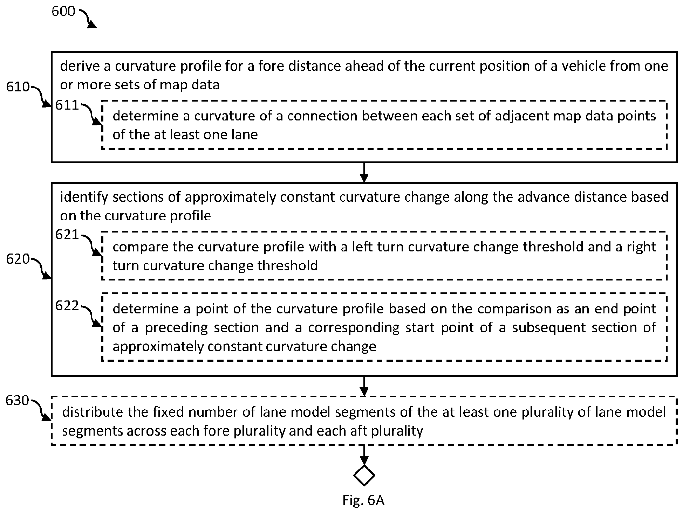

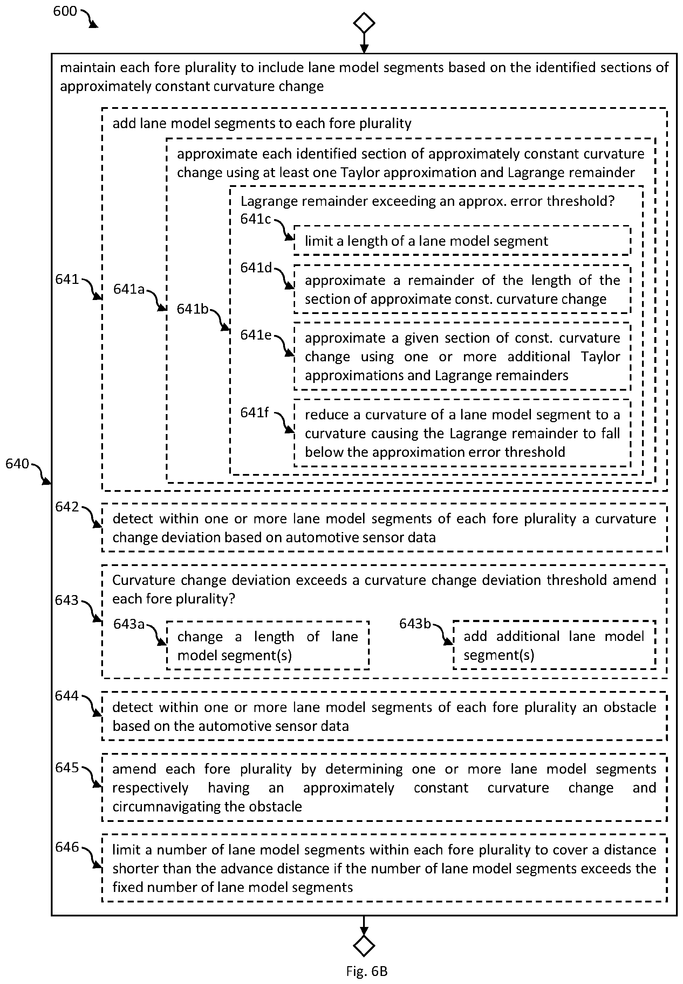

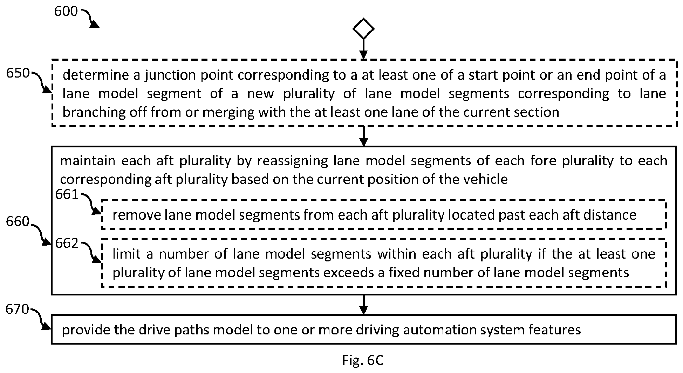

The expression vehicle in the context of the present disclosure, such as vehicle 700 of Fig. 6, refers to any kind of motor vehicle configured to transport people and/or cargo. The motor of vehicle 700 may be any kind of motor, such as an electric motor or an internal combustion engine. Vehicle 700 may e.g. be a passenger vehicle or any other kind of vehicle including one or more automotive sensors 610 and an automotive control unit 700 enabling vehicle 700 to perform the maintenance of the drive paths model discussed in the following as well as one or more driving automation system features, including those which directly or indirectly use the drive paths model of the present disclosure to take lateral and/or longitudinal control decisions. The one or more automotive sensors 610 may thus be any type of automotive sensor configured to capture automotive sensor data indicative of a driving environment of vehicle 700, thereby providing environmental awareness for vehicle 700. The one or more automotive sensors 610 may e.g. be cameras, infrared cameras, radar sensors or LiDAR sensors of varying capturing ranges and resolutions. The one or more automotive sensors 610 may further be automotive sensors configured to capture odometry data of vehicle 700, such as an acceleration, a velocity or any other odometry parameter in any one or more of three dimensions in both a local coordinate system, such as the vehicle coordinate system centered on the rear axle, or a global coordinate system, such as GPS coordinates.

Further, the expression driving automation system feature in the context of the present disclosure is to be understood in the sense of standard J3016 of SAE International as design-specific functionality of a driving automation system at a given level of driving automation, i.e. in the context of the present disclosure any one of levels 1 to 5 of driving automation as defined in the taxonomy of driving automation of standard J3016. More precisely, at least one of the one or more driving automation system features of vehicle 610 is configured to at least indirectly determine the longitudinal and/or lateral control of vehicle 700 based on the maintained drive paths model. Accordingly, vehicle 700 may in view of the one or more driving automation system features also be referred to as at least partially automated vehicle 700.

To maintain the above-discussed drive paths model, first a curvature profile of at least the lane vehicle 700 is traveling along is derived from one or more sets of map data. In addition, the curvature profile may be updated based on automotive sensor data, e.g. if the one or more sets of map data are incorrect or if the current traffic situation necessitates changes to the drive paths model, such as in case of accidents or lane closures. Then, sections of constant curvature change within the curvature profile are identified, which are used to generate lane model segments. These lane model segments are then added to the fore plurality of a given plurality of lane model segments up to the fore distance or at least up to the coverable fore plurality if the total number of lane model segments is fixed in order to maintain the fore plurality. These steps are constantly performed as the position of vehicle 700 changes. At the same time, any lane model segments no longer belonging to the fore plurality based on the current position of vehicle 700 are re-assigned to the aft plurality and finally deleted from the aft plurality once they are located outside of the aft distance or at least outside of the coverable aft plurality if the total number of lane model segments is fixed.

Accordingly, the maintenance of the drive paths model is based on curvature changes of the road vehicle 700 travels along and determines the lane model segments based on lane segments of constant curvature change. This approach allows variable lengths of the generated lane model segments, which in turn enable an improved approximation of road geometries while ensuring that the processing of the drive paths model is performed in a time frame suitable for safe lateral and/or longitudinal guidance of the vehicle, as lane model segments may cover long distances if the curvature change remains constant for long distances.

The general concept of maintaining the drive paths model will now be described in detail with reference to the flow chart of Figs. 6A and 6C, which illustrates method 100 for maintaining the drive paths model during operation of vehicle 700 and with reference to Figs. 2A to 4, which provide examples of how the drive paths model is maintained by method 600.

It will be understood that dashed boxes in Figs. 6A to 6C illustrate optional method steps. It will further be understood that the steps shown in Figs. 6A to 6C may be performed at least partially concurrently as the current position of vehicle 700 changes as will become apparent from the following discussion of method 600.

In step 610, method 600 derives a curvature profile for the fore distance ahead of the current position of vehicle 700 from one or more sets of map data. The curvature profile is indicative of a curvature *κ* of at least one lane of the current section of the road ahead of vehicle 700.

Fig. 2B illustrates a curvature profile 230 of a road 210 between start point S and end point E of road 210 indicated by diamond shapes in Fig. 2A. Accordingly, curvature profile 230 is slightly longer than the fore distance, which in the case of Fig. 2A would only extend from vehicle 700 (e.g. the rear axle of vehicle 700) to end point R. As can be seen, curvature profile 700 is indicative of a curvature *κ* of approximately zero during straight sections of road 210. During the two turns of road 210, curvature *κ* constantly changes in value and then plateaus before returning at a constant rate of change to a curvature *κ* of approximately zero. The same concept is illustrated in Fig. 2B for road 310, i.e. a roundabout, which shows a curvature profile 330 with a curvature *κ* having a positive constant curvature for an extended portion of the roundabout of road 310 and including sections of curvature *κ* below zero during entry and exit of the roundabout. As in the case of curvature profile 230, curvature changes in curvature profile 330 exhibit constant curvature change, as turns and roundabouts may typically be designed based on constant curvature change in order to enable safe and comfortable travel along such sections by vehicles, such as vehicle 700.

To determine the curvature profile, step 610 may include a step 611, in which method 600 may determine a curvature *κ* of a connection between each set of adjacent map data points of the at least one lane. That is, lanes are typically included in map data based on start and end points of segments. In step 611, method 600 may for example determine a connection between adjacent start and end points either as having an approximately constant curvature change if the segments between start and end points include turns or entries and exits of roundabouts, or as having a constant curvature if the segments between start and end points include straight road sections or constant sections of turns or roundabouts. It will be understood that method 600 may in step 611 determine the curvature *κ* of a given road in any other way based on the start and end points provided by the one or more sets of map data and the concept of constant curvature change in road design.

The one or more sets of map data used to derive the curvature profile may include a set of low level map data, i.e. map data having a low resolution, a high detail map, such as map data configured to be used in at least partially automated driving, and/or a crowd map, i.e. map data generated based on automotive sensor data or other input from other vehicles, such as all vehicles of a given original equipment manufacturer. It will be understood that any type of map data or a combination of various types of map data may be used in order to derive an accurate curvature profile of any of the lane for which a plurality of lane model segments is to be maintained.

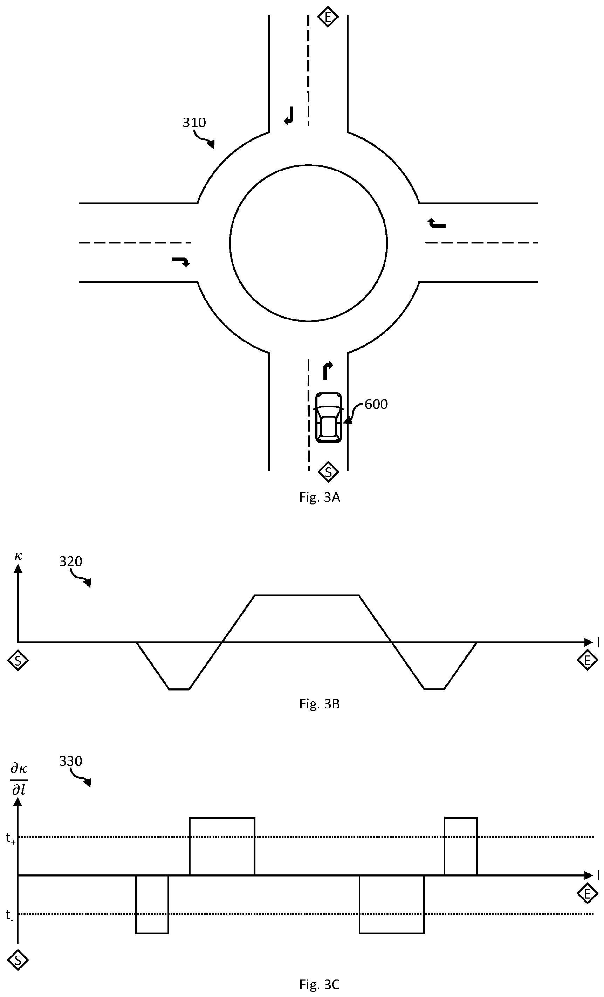

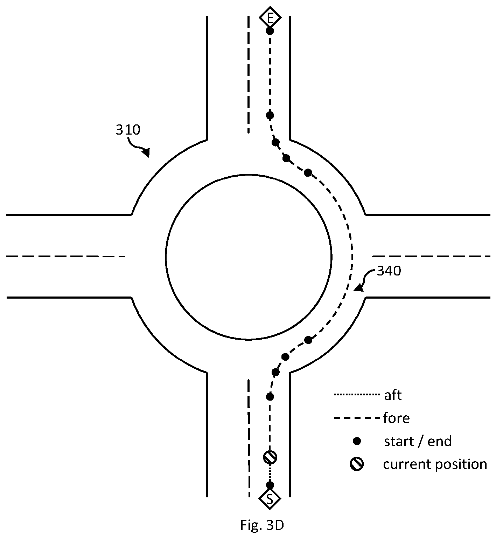

In step 620, method 600 identifies sections of approximately constant curvature change along the fore distance based on the curvature profile. In other words, method 600 determines in step 620 the change in curvature *κ* over distance l, i.e. the derivative $\frac{\partial κ}{\partial l}$. This concept is illustrated by curvature change profile 240 in Fig. 2C based on road 210 of Fig. 2A and curvature profile 230 of Fig. 2B as well as by curvature change profile 340 in Fig. 3C based on road 310 of Fig. 3A and curvature profile 330 of Fig. 3B. Since the curvature change used in road design is typically approximately constant, the curvature change profile typically changes from a curvature change of approximately zero to an approximately constant value during sections of turns and roundabouts with changing curvature, as illustrated by curvature change profiles 230 and 330.

To identify sections of approximately constant curvature change, step 620 may include steps 621 and 622. In step 621 method 100 may compare the curvature profile with a left turn curvature change threshold and a right turn curvature change threshold. The left turn curvature change threshold and the right turn curvature change threshold are respectively illustrated in Figs. 2C and 3C by threshold t₊ and threshold t₋.

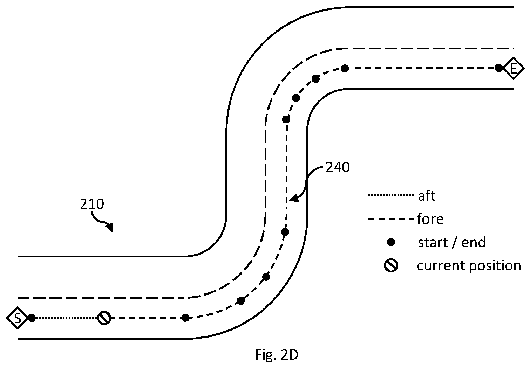

If the curvature change exceeds one of the two thresholds, method 100 may then determine in step 622 the point at which one of the two thresholds is exceeded as an end point of a preceding section of approximately constant curvature change and a corresponding start point of a subsequent section of approximately constant curvature change. Taking curvature change profile 240 of Fig. 2C as an example, curvature change profile 230 exceeds threshold t₊ and threshold t₋ eight times. Correspondingly, drive paths model 250 of Fig. 2D, which is maintained based on curvature profile 240, includes eight combined start and end points when excluding the start and end points corresponding to start point S and end point E of road 210. Likewise, curvature change profile 340 of Fig. 3C exceeds threshold t₊ and threshold t₋ eight times and corresponding drive paths model 350 includes eight combined start and end points when excluding the start and end points corresponding to start point S and end point E of road 310.

It will be understood that other approaches than the threshold approach of steps 621 and 622 may be used by step 620 to identify sections of approximately constant curvature change based on the curvature profile than the approach discussed. For example, any point at which the curvature change profile changes from zero to a non-zero value may be chosen as an end point and corresponding start point of a given section of approximately constant curvature. In a further example, any position at which the **derivative** of the curvature change profile, i.e. $\frac{{\partial }^{2} κ}{\partial {l}^{2}}$ is non-zero may be chosen as an end point and corresponding start point of a given section of approximately constant curvature.

As discussed above, the one or more pluralities of lane model segments of the drive paths model may respectively include a fixed number of lane model segments. Accordingly, in implementations of the present disclosure in which the number of lane model segments per plurality of lane model segments is fixed, method 600 may include step 630, in which method 600 distributes the fixed number of lane model segments across the fore plurality and the aft plurality of each plurality of lane model segments. The fixed number of lane model segments may be distributed across the fore and aft pluralities in a manner ensuring that most of the aft distance and fore distance can be covered by lane model segments. To thereby ensure sufficient environmental awareness for the one or more driving automation system features of vehicle 700.

In step 640, method 600 maintains each fore plurality to include lane model segments based on the identified sections of approximately constant curvature change. That is, based on start and end points of the identified sections of approximately constant curvature change, method 600 maintains each fore plurality to include lane model segments covering each lane of a given road approximated by the drive paths model along part or all of the fore distance ahead of the current position of vehicle 700. To this end, step 640 may include step 641, in which method 600 may add lane model segments to each fore plurality based on the current position of vehicle 700and the identified sections of approximately constant curvature change, i.e. based on the continuous performance of at least steps 610 and 620. It will be understood that steps 640 and 641 may thus include generating the lane model segments as vehicle 700 moves by deriving any of the above-discussed parameters used to define each lane model segment from the start and end points identified in step 620.

To generate the lane model segments, method 600 may include step 641, in which method 600 may approximate each identified section of approximately constant curvature change using at least one corresponding n-th order Taylor approximation and a corresponding n+1-th order Lagrange remainder. The n-th order Taylor approximation is to be understood as the nth order Taylor polynomial approximating a function connecting a start point and an end point of a given section of constant curvature change. Further, the n +1-th order Lagrange remainder is to be understood as an estimation of the error inherent in approximating the function connecting the start point and the end point of a given section of constant curvature change using the n-th order Taylor approximation. The order n may be chosen based on the required accuracy of the approximation of the function connecting the start point and the end point of a given section of constant curvature change as well as runtime requirements. For example, the order n may be chosen to be 3, 4 or 5, i.e. the n-th order Taylor approximation may a third, fourth or fifth order Taylor polynomial with a corresponding fourth, fifth or sixth order Lagrange remainder.

To account for the approximation error, method 600 may, subsequent to step 641a, in step 641b determine if the corresponding n+1-th order Lagrange remainder exceeds an approximation error threshold and if this is the case perform any one of steps 641c to 641f to account for the approximation error. To determine whether the n+1-th order Lagrange remainder exceeds the approximation error threshold, any parameters identifying the corresponding lane model segment may be used as input of the +1-th order Lagrange remainder, such as e.g. like an arc-length, an initial curvature and/or a curvature change of the corresponding lane model segment.

In step 641c, method 600 may limit a length of a given lane model segment corresponding to a given identified section of approximately constant curvature change to a length along which the corresponding n+1-th order Lagrange remainder remains below the approximation error threshold, i.e. a length shorter than a length of the corresponding identified section of approximately constant curvature change. Accordingly, method 600 may in step 641d approximate a remainder of the length of the corresponding identified section of approximately constant curvature change using a further n-th order Taylor approximation. In other words, method 600 may in steps 641c and 641d reduce the approximation error as indicated by the n+1-th Lagrange remainder by approximating a given identified section of approximately constant curvature change with more than one lane model segment based on corresponding n-th order Taylor approximations.

In step 641e, method 600 may approximate a given section of constant curvature change using one or more additional corresponding n-th order Taylor approximations and n+1-th order Lagrange remainders. The number of additional corresponding n-th order Taylor approximations may depend on the number of n+1-th order Lagrange remainders exceeding an approximation error threshold. That is, while in steps 641c and 641d multiple lane model segments are generated to approximate a given section of constant curvature change if the corresponding n+1-th order Lagrange remainder exceeds an approximation error threshold, only one lane model segment is generated to approximate the given section of constant curvature change. However, multiple n-th order Taylor approximations are used to generate the lane model segment. The number of n-th order Taylor approximations used to generate the lane model segment is based on how often the error threshold is exceeded. Taking a 20 m long section of constant curvature change as an example, if the n+1-th order Lagrange remainder corresponding to the first n-th order Taylor approximation exceeds the approximation error threshold after 15 m, the lane model segment approximating the 20 m long section of constant curvature change may be generated based on the first n-th order Taylor approximation for the first 15 m and the remaining 5 m may be generated based on a second n-th order Taylor approximation. In a further example, such a 20 m long section of constant curvature change may also be approximated by a lane model segment based on two 10 m n-th order Taylor approximations. The approach of step 641e, i.e. generating a lane model segment based on multiple n-th order Taylor approximations if necessary in view of the n+1-th order Lagrange remainder, may be e.g. chosen if the number of lane model segments per plurality of lane model segments is limited.

In step 641f, method 600 may reduce a curvature of a lane model segment corresponding to a given identified section of approximately constant curvature change to a curvature causing the corresponding n+1-th order Lagrange remainder to fall below the approximation error threshold.

It will be understood that any one of steps 641c to 641f may be performed alone or in combination in order to generate lane model segments sufficiently approximating a given section of constant curvature change. For example, method 600 may employ an optimizer to generate lane model segments based on at least one n-th order Taylor approximation and the corresponding n+1-th order Lagrange remainder which aims to reduce the n+1-th order Lagrange remainder below the approximation error threshold based on any one of the measures of steps 641c to 641f discussed above.

In addition to maintaining each fore plurality by generating and adding new lane model segments based on the curvature profile and the curvature change profile derived from one or more sets of map data, method 600 may in step 640 further amend each fore plurality based on automotive sensor data as will be discussed in the following with regard to steps 643 to 646. Steps 643 to 643b relate to cases in which the curvature indicated by the one or more sets of map data may not correspond to the actual road design encountered by vehicle 700. Steps 644 to 646 relate to cases in which vehicle 700 encounters an obstacle and needs to amend a given fore plurality accordingly.

In step 642 method 600 may detect within one or more lane model segments of each fore plurality a curvature change deviation based on the automotive sensor data. That is, as vehicle 700 travels along a given road, method 600 may detect based on the data provided by one or more of automotive sensors 610 a curvature of the lane vehicle 700 is traveling along as well as of any additional lanes approximated by a given drive paths model, which does not correspond to the curvature of the road derived in step 610 from the one or more sets of map data. In step 643, method 600 may then proceed to compare the curvature change deviation to a curvature change deviation threshold. If the curvature change deviation exceeds the curvature change deviation threshold, method 600 may then, depending on the detected curvature change deviation, amend each fore plurality of the drive paths model in accordance with step 643 and/or step 643b. In step 643a, method 600 may change a length of one or more lane model segments based on the detected curvature change deviation. In step 643b, method 600 may add one or more additional lane model segments to each fore plurality segments based on the detected curvature change deviation. In other words, method 600 may in steps 642 to 643b detect that the curvature of the road differs from the curvature of the road as indicated by the one or more sets of map data and may then adapt the lane model segments of each fore plurality by changing their length and/or adding intermittent lane model segments as needed to approximate the actual curvature of the road as detected based on the automotive sensor data. It will thus be understood that implementations of method 600 which include steps 642 to 643b may also include steps as part of steps 610 and 620 in which the curvature profile and the curvature change profile are updated based on the automotive sensor data.

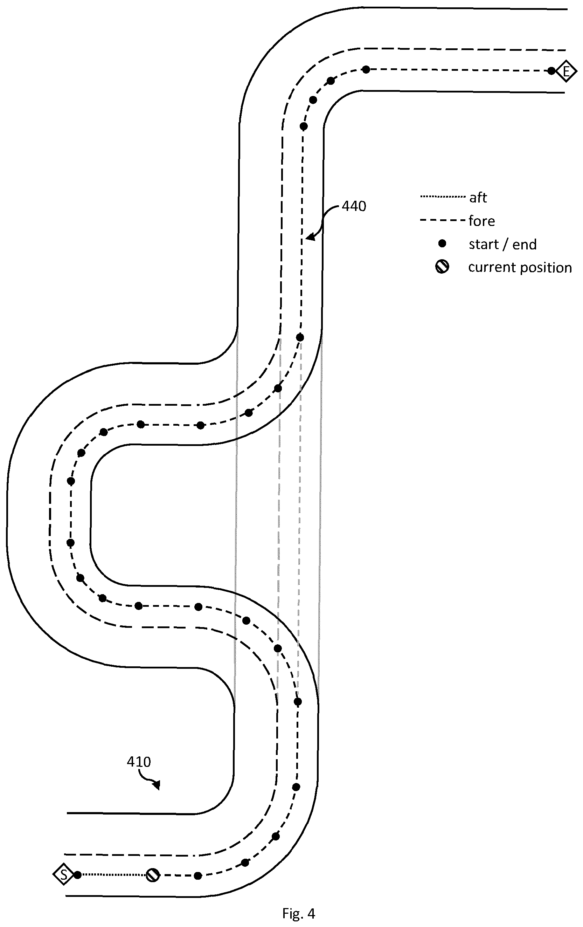

The concept of steps 642 to 643b is illustrated in Fig. 4. Fig. 4 shows road 410 and a section differing from the actual layout of road 410 derived from the one or more sets of map data in grey. Accordingly, based on the one or more sets of map data road 410 and thus drive paths model 460 was thus assumed to include a long straight segment. However, the actual layout of road 410 includes a left turn, two right turns and a further left turn, e.g. due to construction works on the assumed long straight segment. Accordingly, as part of steps 642 to 643b, the lane model segment covering the assumed long straight segment of road 410 beginning after the initial left turn and ending at the beginning of the final right turn is either shortened and 16 lane model segments are added after the shortened lane model segment and the lane model segment at the beginning of the final right turn or is simply replaced by 17 lane model segments.

In step 644, method 600 may detect within one or more lane model segments of each fore plurality an obstacle, such as a stationary vehicle or a pallet, on the corresponding lane of a given road based on the automotive sensor data. To avoid the obstacle, method 600 may then proceed in step 645 to amend each fore plurality by determining one or more lane model segments respectively having an approximately constant curvature change and circumnavigating the obstacle. In other words, method 600 may employ the concept of designing turns of lanes to exhibit constant curvature change in order to determine lane model segments guiding vehicle 700 around an obstacle detected by one or more of automotive sensors 610. It will be understood that amending each fore plurality based on detected obstacles may be performed in the same manner as discussed above with regard to steps 643a and 643b in case of deviations between the curvature derived from map data and the curvature detected based on automotive sensor data. Consequently, steps 610 and 620 of method 600 may likewise include steps in which the curvature profile and the curvature change profile are updated if an obstacle is detected in any one of the lanes approximated by the drive paths model.

Step 640 may finally include a step 646, in which method 600 may limit a number of lane model segments within each fore plurality to cover a distance shorter than the fore distance if the at least one plurality of lane model segments exceeds a fixed number of lane model segments. That is, step 646 may ensure the trade-off between coverage of the fore distance by each fore plurality and fixed number of lane model segments if the share of the fixed number of lane model segments allocated to the fore plurality is insufficient to cover the entirety of the fore distance, which may e.g. occur on very curvy roads.

Method 600 may include a step 650, in which method 600 may determine a junction point corresponding to a at least a start point or an end point of a lane model segment of a new plurality of lane model segments corresponding to a lane branching off from or merging with the at least one lane of the current section based on the one or more sets of map data and/or the automotive sensor data. The determination of the junction point may be based on identifying a section of constant curvature change beginning on or ending on, respectively, a lane model segment of the at least one plurality of lane model segments closest to the lane branching off from or merging with the at least one lane of the current section. That is, a beginning of a lane branching off from or an end of a lane merging with a given lane may be considered a turn away from or toward, respectively, the lane having constant curvature change as discussed above. Accordingly, method 600 may in step 650 determine the junction point as a point on the lane model segment closest to the lane branching off from or merging with the at least one lane of the current section. That is, the junction point may be any point between the start point and the end point of the lane model segment closest to the lane branching off from or merging with the at least one lane of current section from which or to which a turn having constant curvature change may be achieved. Depending on the position on a given lane model segment enabling a turn having constant curvature change onto or from the at least one lane of the current section of the road, the junction point may also coincide with a start point or an end point of a given lane model segment.

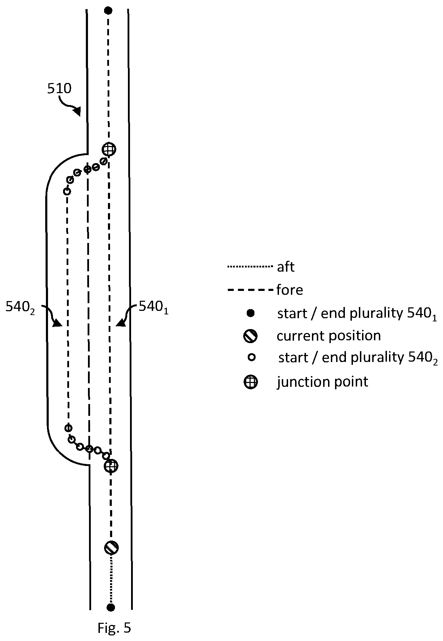

To illustrate the determination of junction points as performed by step 650 based on the concept of constant curvature change, Fig. 5 shows an example road 510 with a single lane from which a lane branches off and which later merges again with the single lane. As can be seen, the junction points are both located on the single lane model segment of the fore plurality of plurality of lane model segments 540₁ and in this example do not coincide with the start and end points thereof. Based on these junction points, the lane model segments of new plurality of lane model segments 540₂ may be derived to approximate a turn onto as well as from the second lane of road 510.

While the lane shown in Fig. 5, which branches off and then merges again, is shown as a parallel lane, it will be understood that the concept of determining junction points and thereby start and/or end points of lane model segments of new pluralities of lane model segments approximating branching-off or merging lanes may also apply to branching-off or merging lanes which do not run in parallel to a given current section of the road vehicle 700 is traveling along.

It will be understood that method 600 may subsequent to step 650 perform steps 610 to 646 in order to populate the fore plurality of the new plurality of lane model segments. The aft plurality may initially be left empty or may be initialized based on the plurality of lane model segments from which the new lane branched off.

In step 660, method 600 maintains each aft plurality by reassigning lane model segments of each fore plurality to each corresponding aft plurality based on the current position of vehicle 700. To limit the number of lane model segments included in each aft plurality, step 660 may include a step 661, in which method 600 may remove lane model segments from each aft plurality located past each aft distance. It will be understood that method 600 may also remove lane model segments from the aft plurality based on other approaches, e.g. based on the storage space allocated to the drive paths model maintained by method 600. Further and analogous to step 646, step 660 may include a step 661, in which method 600 may limit a number of lane model segments within each aft plurality if the at least one plurality of lane model segments exceeds a fixed number of lane model segments. That is, in step 661 method 600 may ensure the trade-off between coverage of the aft distance by each aft plurality and the fixed number of lane model segments if the share of the fixed number of lane model segments allocated to the aft plurality is insufficient to cover the entirety of the aft distance.

Upon turning on vehicle 700, the aft plurality may either be populated to approximate the corresponding lane based on steps 660 and 661 as vehicle 700 moves or may need to be initialized, e.g. if vehicle 700 turns from a parallel parking position into traffic. To this end, method 600 may initialize the aft plurality by performing steps 610 to 622 discussed above in order to generate lane model segments for the aft plurality. Accordingly, method 600 may, during the initialization of the aft plurality, derive the curvature profile also for the aft distance behind the current position of vehicle 700 and may identify sections of approximately constant curvature change in order to generate lane model segments for the aft plurality.

Finally, in step 670 method 600 provides the drive paths model to one or more driving automation system features configured to perform lateral and/or longitudinal control of the vehicle based on the drive paths model.

In summary, method 600 maintains the drive paths model by continuously determining a curvature of the road ahead of vehicle 700 based on map data and then determines sections of approximately constant curvature change based on the curvature of the road ahead of vehicle 700. Points at which the curvature change changes serve as start and end points respectively of lane model segments of the drive paths model approximating one or more lanes of the road ahead of vehicle 700. If obstacles are detected or the road exhibits a different curvature than expected based on the map data, method 600 may update, i.e. amend, the lane model segments, e.g. by replacing, adding and/or shortening lane model segments.

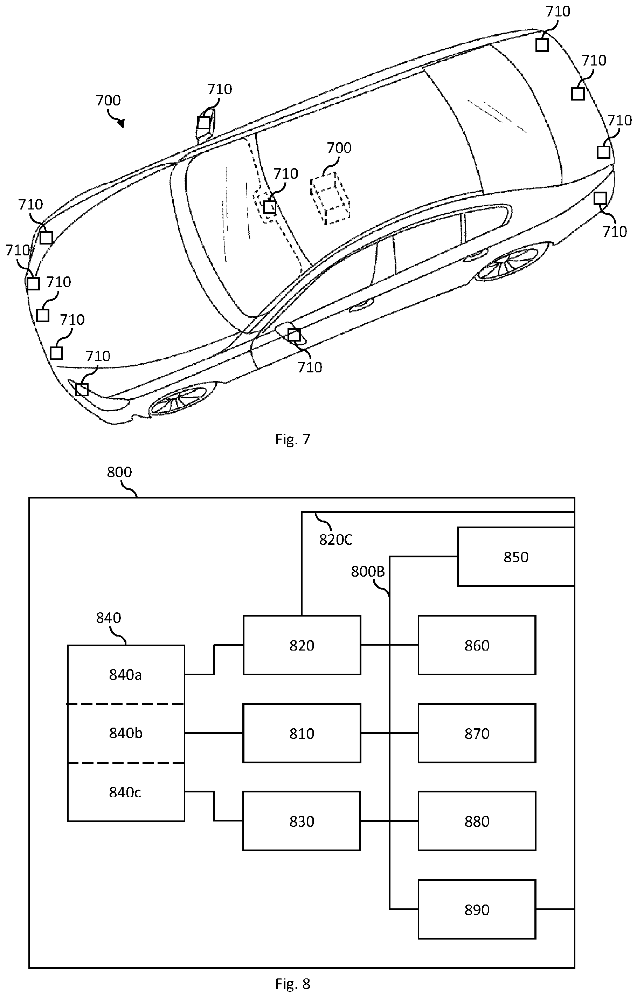

Fig. 8 shows automotive control unit 800 configured to perform method 600, which may also be referred to as an electronic control unit (ECU). Automotive control unit 800 may include a processor 810, a graphics processing unit (GPU) 820, automotive processing system 830, a memory 840, a removable storage 850, a storage 860, a cellular interface 870, a global navigation satellite system (GNSS) interface 880 and a communication interface 890.

Processor 810 may be any kind of single-core or multi-core processing unit employing a reduced instruction set (RISC) or a complex instruction set (CISC). Exemplary RISC processing units include ARM based cores or RISC V based cores. Exemplary CISC processing units include x86 based cores or x86-64 based cores. Processor 810 may perform instructions causing automotive control unit 800 to perform method 600. Processor 810 may be directly coupled to any of the components of automotive control unit 810 or may be directly coupled to memory 840, GPU 820 and device bus 800B.

GPU 820 may be any kind of processing unit optimized for processing graphics related instructions or more generally for parallel processing of instructions. As such, GPU 820 may be configured to generate a display of information, such as information relating to one or more driving automation system features or telemetry data, to a driver of the vehicle, e.g. via a head-up display (HUD) or a display arranged within the view of the driver. GPU 820 may be coupled to the HUD and/or the display via connection 820C. GPU 820 may further perform at least a part of method 600 to enable fast parallel processing of instructions implementing method 600. It should be noted that in some embodiments, processor 610 may determine that GPU 820 need not perform instructions relating to method 600. GPU 820 may be directly coupled to any of the components of automotive control unit 810 or may be directly coupled to processor 810 and memory 840. In some embodiments, GPU 820 may also be coupled to the device bus.

Automotive processing system 830 may be any kind of system-on chip configured to provide trillions of operations per second (TOPS) e.g. in order to enable automotive control unit 800 to perform one or more driving automation system features while driving, which may perform longitudinal and/or lateral control of vehicle 700 based on the drive paths model maintained by method 600. Automotive processing system 830 may only interface with processor 810 or may interface with other devices via the system bus.

Memory 840 may be any kind of fast storage enabling processor 810, GPU 820 and automotive processing system 830 to store instructions for fast retrieval during processing of instructions as well as to cache and buffer data. Memory 840 may be a unified memory coupled to processor 810, GPU 820 and automotive processing system 830 in order to enable allocation of memory 840 to processor 810, GPU 820 and automotive processing system 830 as needed. Alternatively, processor 810, GPU 820 and automotive processing system 830 may be coupled to separate processor memory 840a, GPU memory 840b and automotive processing system memory 840c.

Removable storage 850 may be a storage device which may be removably coupled with automotive control unit 800. Examples include a digital versatile disc (DVD), a compact disc (CD), a Universal Serial Bus (USB) storage device, such as an external SSD, or a magnetic tape. It should be noted that removable storage 850 may store data, such as instructions of method 600 and/or the drive paths model or may be omitted.

Storage 860 may be a storage device enabling storage of program instructions and other data. For example, storage 860 may be a hard disk drive (HDD), a solid state disk (SSD) or some other type of nonvolatile memory. Storage 860 may for example store the instructions of method 600 and/or the drive paths model.

Removable Storage 850 and storage 860 may be coupled to processor 810 via system bus 810B. System bus 810B may be any kind of bus system enabling processor 810 and optionally GPU 820 as well as automotive processing system 830 to communicate with the other devices of automotive control unit 800. The system bus may for example be a Peripheral Component Interconnect express (PCle) bus or a Serial AT Attachment (SATA) bus.

Cellular interface 870 may be any kind of interface enabling automotive control unit 800 to communicate via a cellular network, such as a 4G network or a 5G network, e.g. with other vehicles and/or roadside infrastructure in V2V or V2X communication.

GNSS interface 880 may be any kind of interface enabling automotive control unit 800 to receive positional data provided by a satellite network, such as the Global Positioning System (GPS), the Global Navigation Satellite System (GLONASS) or Galileo.

Communications interface 890 may enable automotive control unit 800 to interface with external devices, either directly or via network, via a connection as illustrated by the line coupling communications interface 890 to the outside of automotive control unit 800. Communications interface 890 may for example enable automotive control unit 800 to couple to a wired or wireless network, such as Ethernet, Wifi, a Controller Area Network (CAN) bus or any bus system appropriate for communication in vehicles. For example, automotive control unit 800 may be coupled to automotive sensors 710 or any other data sources within vehicle 700 via communications interface 890. Communications interface 890 may also include a USB port or a serial port to enable direct communication with an external device.

Automotive control unit 800 may be integrated with vehicle 700, e.g. beneath the cabin, under the dashboard or in the trunk of vehicle 700.

It will be understood that automotive control unit 800 may include further or fewer elements than shown in Fig. 8, as required by the actual implementation of automotive control unit 800. Further, the above discussed elements may be distributed across multiple (sub) units.

The invention may further be illustrated by the following examples.

In an example, a method is configured to maintain a drive paths model during operation of a vehicle. The drive paths model is configured to provide environmental awareness regarding a current section of a road to one or more driving automation system features of the vehicle and includes at least one plurality of lane model segments. Each plurality of lane model segments approximates corresponding lane segments of a corresponding lane of the current section of the road. Each plurality of lane model segments includes a fore plurality of lane model segments ahead of a current position of the vehicle and an aft plurality of lane model segments behind the current position of the vehicle. The method comprises, while the current position of the vehicle changes: deriving a curvature profile for a fore distance ahead of the current position of the vehicle from one or more sets of map data, the curvature profile being indicative of a curvature of at least one lane of the current section of the road ahead of the vehicle, identifying sections of approximately constant curvature change along the fore distance based on the curvature profile, maintaining each fore plurality to include lane model segments based on the identified sections of approximately constant curvature change, maintaining each aft plurality by reassigning lane model segments of each fore plurality to each corresponding aft plurality based on the current position of the vehicle; and providing the drive paths model to one or more driving automation system features, the one or more driving automation system features being configured to perform lateral and/or longitudinal control of the vehicle based on the drive paths model.

In the example method, the maintaining of each fore plurality may include adding lane model segments to each fore plurality based on the current position of the vehicle.

In the example method, the adding lane model segments may include approximating each identified section of approximately constant curvature change using at least one corresponding n-th order Taylor approximation and a corresponding n+1-th order Lagrange remainder.

In the example method, the adding of lane model segments may further include, if the corresponding n+1-th order Lagrange remainder exceeds an approximation error threshold limiting a length of a lane model segment corresponding to a given identified section of approximately constant curvature change to a length along which the corresponding n+1-th order Lagrange remainder remains below the approximation error threshold, the length being less than a length of the corresponding identified section of approximately constant curvature change, and approximating a remainder of the length of the corresponding identified section of approximately constant curvature change using a further n-th order Taylor approximation.

In the example method, the adding of lane model segments may further include, if the corresponding n+1-th order Lagrange remainder exceeds an approximation error threshold, approximating a given section of constant curvature change using one or more additional corresponding n-th order Taylor approximations and n+1-th order Lagrange remainders, the number of additional corresponding n-th order Taylor approximations being dependent on the number of n+1-th order Lagrange remainders exceeding an approximation error threshold.

In the example method, the adding of lane model segments may further include, if the corresponding n+1-th order Lagrange remainder exceeds an approximation error threshold reducing a curvature of a lane model segment corresponding to a given identified section of approximately constant curvature change to a curvature causing the corresponding n+1-th order Lagrange remainder to fall below the approximation error threshold.

In the example method, the maintaining of each fore plurality may include detecting, based on automotive sensor data, within one or more lane model segments of each fore plurality a curvature change deviation, and if the curvature change deviation exceeds a curvature change deviation threshold, amending each fore plurality by: changing a length of the one or more lane model segments based on the detected curvature change deviation; and/or adding one or more additional lane model segments to each fore plurality based on the detected curvature change deviation.

In the example method, the maintaining of each fore plurality may further include detecting, based on the automotive sensor data, within one or more lane model segments of each fore plurality an obstacle, and amending each fore plurality by determining one or more lane model segments respectively having an approximately constant curvature change and circumnavigating the obstacle.

In the example method, the identifying of the sections of approximately constant curvature change may include comparing the curvature profile with a left turn curvature change threshold and a right turn curvature change threshold, and determining a point of the curvature profile exceeding one of the left turn curvature change threshold and the right turn curvature change threshold as an end point of a preceding section of approximately constant curvature change and a corresponding start point of a subsequent section of approximately constant curvature change.

In the example method, the at least one plurality of lane model segments may include a fixed number of lane model segments and the example method may further comprise distributing the fixed number of lane model segments of the at least one plurality across each fore plurality and each aft plurality.

In the example method, the maintaining of each fore plurality may include limiting a number of lane model segments within each fore plurality to cover a distance shorter than the fore distance if the at least one plurality of lane model segments exceeds a fixed number of lane model segments.

In the example method, the maintaining of each aft plurality may include limiting a number of lane model segments within each aft plurality if the at least one plurality of lane model segments exceeds a fixed number of lane model segments.

In the example method, each aft plurality may include one or more lane model segments extending along an aft distance aft of the current position of the vehicle, and the maintaining each aft plurality may include removing lane model segments from each aft plurality located past each aft distance.

In the example method, the drive paths model may include a number of pluralities of lane model segments corresponding to a number of lanes of the current section of the road.

In the example method, the deriving the curvature profile may include determining, for each set of adjacent map data points of the at least one lane, a curvature of a connection between each set of adjacent map data points of the at least one lane.

The example method may further comprises determining, based on the one or more sets of map data and/or the automotive sensor data, a junction point corresponding to a at least one of a start point or an end point of a lane model segment of a new plurality of lane model segments corresponding to lane branching off from or merging with the at least one lane of the current section, wherein the determining the junction point may be based on identifying a section of constant curvature change beginning on or ending on, respectively, a lane model segment of the at least one plurality of lane model segments closest to the lane branching off from or merging with the at least one lane of the current section.

An example automotive control unit comprises at least one processing unit and a memory coupled to the at least one processing unit and is configured to store machine-readable instructions. The machine-readable instructions cause the at least one processing unit to maintain a drive paths model during operation of a vehicle. The drive paths model is configured to provide environmental awareness regarding a current section of a road to one or more driving automation system features of the vehicle and includes at least one plurality of lane model segments. Each plurality of lane model segments approximates corresponding lane segments of a corresponding lane of the current section of the road. Each plurality of lane model segments includes a fore plurality of lane model segments ahead of a current position of the vehicle and an aft plurality of lane model segments behind the current position of the vehicle. To maintain the drive paths model, the machine-readable instructions further cause the at least one processing unit to, while the current position of the vehicle changes: derive a curvature profile for a fore distance ahead of the current position of the vehicle from one or more sets of map data, the curvature profile being indicative of a curvature of at least one lane of the current section of the road ahead of the vehicle; identify sections of approximately constant curvature change along the fore distance based on the curvature profile, maintain each fore plurality to include lane model segments based on the identified sections of approximately constant curvature change, maintain each aft plurality by reassigning lane model segments of each fore plurality to each corresponding aft plurality based on the current position of the vehicle, and provide the drive paths model to one or more driving automation system features, the one or more driving automation system features being configured to perform lateral and/or longitudinal control of the vehicle based on the drive paths model.

In the example automotive control unit, the machine-readable instructions may further cause the at least one processing unit to perform any one of the above example methods.

An example vehicle comprises the above exemplary automotive control unit.

The preceding description has been provided to illustrate a method and a system for maintaining a drive paths model. It should be understood that the description is in no way meant to limit the scope of the present disclosure to the precise embodiments discussed throughout the description. Rather, the person skilled in the art will be aware that the examples of the present disclosure may be combined, modified or condensed without departing from the scope of the present disclosure as defined by the following claims.

### List of Reference Signs

| | | | |
|---|---|---|---|
| 110 | road | 860 | storage |
| 111 | oncoming lane | 870 | cellular interface |
| 112 | own lane / ego lane | 880 | GNSS interface |
| 140 | drive paths model | 890 | communications interface |
| 210 | road | | |
| 211 | oncoming lane | | |
| 212 | own lane / ego lane | | |
| 220 | curvature profile | | |
| 230 | curvature change profile | | |
| 240 | drive paths model | | |
| 310 | road | | |
| 320 | curvature profile | | |
| 330 | curvature change profile | | |
| 340 | drive paths model | | |
| 410 | road | | |
| 440 | drive paths model | | |
| 510 | road | | |
| 540₁ | first plurality of lane model segments | | |
| 540₂ | second plurality of lane model segments | | |
| 600 | method | | |
| 610 - 670 | method steps | | |
| 700 | vehicle | | |
| 710 | automotive sensor | | |
| 800B | bus | | |
| 810 | CPU | | |
| 820 | GPU | | |
| 820c | connection | | |
| 830 | automotive processing system | | |
| 840 | memory | | |
| 850 | removable storage | | |

## Claims

1. Method (600) for maintaining a drive paths model (140, 240, 340, 440) during operation of a vehicle (700), the drive paths model (140, 240, 340, 440) being configured to provide environmental awareness regarding a current section of a road (110, 210, 310, 410, 510) to one or more driving automation system features of the vehicle (700) and including at least one plurality of lane model segments (540₁, 540₂), each plurality of lane model segments (540₁, 540₂) approximating corresponding lane segments of a corresponding lane (111, 112, 211, 212) of the current section of the road (110, 210, 310, 410, 510), wherein each plurality of lane model segments (540₁, 540₂) includes a fore plurality of lane model segments ahead of a current position of the vehicle (700) and an aft plurality of lane model segments behind the current position of the vehicle (700), comprising, while the current position of the vehicle (700) changes:
deriving (610) a curvature profile (220, 320) for a fore distance ahead of the current position of the vehicle (700) from one or more sets of map data, the curvature profile (220, 320) being indicative of a curvature of at least one lane of the current section of the road ahead of the vehicle;
identifying (620) sections of approximately constant curvature change along the fore distance based on the curvature profile (220, 320);
maintaining (640) each fore plurality to include lane model segments based on the identified sections of approximately constant curvature change;
maintaining (660) each aft plurality by reassigning lane model segments of each fore plurality to each corresponding aft plurality based on the current position of the vehicle (700); and
providing (670) the drive paths model (140, 240, 340, 440) to one or more driving automation system features, the one or more driving automation system features being configured to perform lateral and/or longitudinal control of the vehicle based on the drive paths model.

2. The method (600) of claim 1, wherein the maintaining (640) each fore plurality includes adding (641) lane model segments to each fore plurality based on the current position of the vehicle.

3. The method (600) of claim 2, wherein the adding (641) of lane model segments includes approximating (641a) each identified section of approximately constant curvature change using at least one corresponding n-th order Taylor approximation and a corresponding n+1-th order Lagrange remainder.

4. The method (600) of claim 3, wherein the adding (641) of lane model segments further includes, if (641b) the corresponding n+1-th order Lagrange remainder exceeds an approximation error threshold:
limiting (641c) a length of a lane model segment corresponding to a given identified section of approximately constant curvature change to a length along which the corresponding n+1-th order Lagrange remainder remains below the approximation error threshold, the length being less than a length of the corresponding identified section of approximately constant curvature change; and
approximating (641d) a remainder of the length of the corresponding identified section of approximately constant curvature change using a further n-th order Taylor approximation.

5. The method (600) of any one of claims 3 to 4, wherein the adding (641) of lane model segments further includes, if (641b) the corresponding n+1-th order Lagrange remainder exceeds an approximation error threshold, approximating (641e) a given section of constant curvature change using one or more additional corresponding n-th order Taylor approximations and n+1-th order Lagrange remainders, the number of additional corresponding n-th order Taylor approximations being dependent on the number of n+1-th order Lagrange remainders exceeding an approximation error threshold.

6. The method (600) of any one of claims 3 to 5, wherein the adding (641) of lane model segments further includes, if (641b) the corresponding n+1-th order Lagrange remainder exceeds an approximation error threshold:
reducing (641f) a curvature of a lane model segment corresponding to a given identified section of approximately constant curvature change to a curvature causing the corresponding n+1-th order Lagrange remainder to fall below the approximation error threshold.

7. The method (600) of any one of the preceding claims, wherein the maintaining (640) each fore plurality includes:
detecting (642), based on automotive sensor data, within one or more lane model segments of each fore plurality a curvature change deviation, and
if (643) the curvature change deviation exceeds a curvature change deviation threshold, amending each fore plurality by:
changing (643a) a length of the one or more lane model segments based on the detected curvature change deviation; and/or
adding (643b) one or more additional lane model segments to each fore plurality based on the detected curvature change deviation.

8. The method (600) of any one of the preceding claims, wherein the maintaining (640) each fore plurality further includes:
detecting (644), based on the automotive sensor data, within one or more lane model segments of each fore plurality an obstacle, and
amending (645) each fore plurality by determining one or more lane model segments respectively having an approximately constant curvature change and circumnavigating the obstacle.

9. The method (600) of any one of the preceding claims, wherein the identifying (620) the sections of approximately constant curvature change includes:
comparing (621) the curvature profile with a left turn curvature change threshold (t₊) and a right turn curvature change threshold (t₋), and
determining (622) a point of the curvature profile exceeding one of the left turn curvature change threshold (t₊) and the right turn curvature change threshold (t₋) as an end point of a preceding section of approximately constant curvature change and a corresponding start point of a subsequent section of approximately constant curvature change.

10. The method (600) of any one of the preceding claims, wherein:
the at least one plurality of lane model segments includes a fixed number of lane model segments,
the method further comprises distributing (630) the fixed number of lane model segments of the at least one plurality across each fore plurality and each aft plurality.

11. The method (600) of any one of the preceding claims, wherein:
each aft plurality includes one or more lane model segments extending along an aft distance aft of the current position of the vehicle, and
wherein the maintaining (660) each aft plurality includes removing (661) lane model segments from each aft plurality located past each aft distance.

12. The method (600) of any one of the preceding claims, further comprising determining (650), based on the one or more sets of map data and/or automotive sensor data, a junction point corresponding to a at least one of a start point or an end point of a lane model segment of a new plurality of lane model segments corresponding to lane branching off from or merging with the at least one lane of the current section, wherein the determining the junction point is based on identifying a section of constant curvature change beginning on or ending on, respectively, a lane model segment of the at least one plurality of lane model segments closest to the lane branching off from or merging with the at least one lane of the current section.

13. An automotive control unit (800), comprising:
at least one processing unit (810, 820, 830); and
a memory (840, 850, 860) coupled to the at least one processing unit (810, 820, 830) and configured to store machine-readable instructions,
wherein the machine-readable instructions cause the at least one processing unit (810, 820, 830) to maintain a drive paths model (140, 240, 340, 440) during operation of a vehicle (700),
wherein the drive paths model (140, 240, 340, 440) is configured to provide environmental awareness regarding a current section of a road (110, 210, 310, 410, 510) to one or more driving automation system features of the vehicle (700) and including at least one plurality of lane model segments (540₁, 540₂), each plurality of lane model segments (540₁, 540₂) approximating corresponding lane segments of a corresponding lane (111, 112, 211, 212) of the current section of the road (110, 210, 310, 410, 510), wherein each plurality of lane model segments includes a fore plurality of lane model segments ahead of a current position of the vehicle (700) and an aft plurality of lane model segments behind the current position of the vehicle (700), and
wherein, to maintain the drive paths model (140, 240, 340, 440), the machine-readable instructions further cause the at least one processing unit (810, 820, 830) to, while the current position of the vehicle (700) changes:
derive a curvature profile (220, 320) for a fore distance ahead of the current position of the vehicle (700) from one or more sets of map data, the curvature profile being indicative of a curvature of at least one lane of the current section of the road (110, 210, 310, 410, 510) ahead of the vehicle (700);
identify sections of approximately constant curvature change along the fore distance based on the curvature profile (220, 320);
maintain each fore plurality to include lane model segments based on the identified sections of approximately constant curvature change;
maintain each aft plurality by reassigning lane model segments of each fore plurality to each corresponding aft plurality based on the current position of the vehicle (700); and
provide the drive paths model (140, 240, 340, 440) to one or more driving automation system features, the one or more driving automation system features being configured to perform lateral and/or longitudinal control of the vehicle (700) based on the drive paths model (140, 240, 340, 440).

14. The automotive control unit (800) of claim 13, wherein the machine-readable instructions further cause the at least one processing unit (810, 820, 830) to perform the method (600) of any one of claims 2 to 12.

15. A vehicle (700) comprising the automotive control unit (800) of any one of claims 13 and 14.
